# EUROPEAN PATENT SPECIFICATION

(11) **EP 1 138 530 B1**
(45) Date of publication and mention of the grant of the patent: **06.11.2013**
(21) Application number: 01301287.7
(22) Date of filing: 13.02.2001
(51) Int. Cl.: B60G 17/015, G01C 21/30

(54) **Surface vehicle vertical trajectory planning**
Planung von vertikalen Trajektorien für ein Landfahrzeug
Planification de la trajectoire verticale pour un véhicule terrestre

(30) Priority: 27.03.2000 US 535849
(43) Date of publication of application: 04.10.2001
(60) Divisional application: 10178610.1
(73) Proprietor: Bose Corporation, Framingham, MA 01701-9168 (US)
(72) Inventor: Knox, Lawrence D., Framingham, MA 01701-9168 (US); Lackritz, Neal M., Framingham, MA 01701-9168 (US); Parison, James E., Framingham, MA 01701-9168 (US); Short, William R., Framingham, MA 01701-9168 (US)
(74) Representative: Finnie, Peter John

(56) References cited:
- EP-A- 0 534 892
- EP-A- 0 662 602
- EP-A- 0 819 912
- WO-A-98/23918
- DE-A- 3 439 000
- DE-A- 19 600 734
- GB-A- 2 353 872
- US-A- 5 311 173
- US-A- 5 987 378
- US-A- 6 000 703
- PATENT ABSTRACTS OF JAPAN vol. 1999, no. 09, 30 July 1999 (1999-07-30) & JP 11 091550 A (MAZDA MOTOR CORP), 6 April 1999 (1999-04-06)
- PATENT ABSTRACTS OF JAPAN vol. 1998, no. 03, 27 February 1998 (1998-02-27) & JP 09 304083 A (TOYOTA MOTOR CORP), 28 November 1997 (1997-11-28)
- PATENT ABSTRACTS OF JAPAN vol. 1997, no. 05, 30 May 1997 (1997-05-30) & JP 09 011723 A (NEC ENG LTD), 14 January 1997 (1997-01-14)
- PATENT ABSTRACTS OF JAPAN vol. 1999, no. 02, 26 February 1999 (1999-02-26) & JP 10 300480 A (TOYOTA MOTOR CORP), 13 November 1998 (1998-11-13)
- PATENT ABSTRACTS OF JAPAN vol. 1997, no. 02, 28 February 1997 (1997-02-28) & JP 08 271272 A (MATSUSHITA ELECTRIC IND CO LTD), 18 October 1996 (1996-10-18)
- PATENT ABSTRACTS OF JAPAN vol. 2000, no. 13, 5 February 2001 (2001-02-05) & JP 2000 275051 A (XANAVI INFORMATICS CORP), 6 October 2000 (2000-10-06)

## Description

The invention relates to active vehicle suspensions, and more particularly to active vehicle suspension systems including vertical trajectory planning systems.

It is an important object of the invention to provide an improved active vehicle suspension.

US-A-6000703 discloses a vehicle suspension system comprising a profile storage device, which stores a plurality of profiles of paths including their vertical deflection data, a profile retrieving microprocessor, corresponding to the path on which the vehicle is travelled and a controllable suspension element, for applying a force between the payload compartment and the surface engaging device.

US 6268825 discloses a method, suitable for operating a stability control system, such as a vehicle suspension system, in a system vehicle, comprising the steps of sensing a vertical profile of a path, recording said profile, comparing said recorded profile with profiles stored in a database to find if said sensed profile matches one of said stored profiles and updating the detailed road shape data of the detailed map database.

The following additional documents are also of background relevance to present invention, namely EP-A-0819912, DE 19600734 A, DE 3439000, US 5311173 and EP 0534892.

According to the present invention there is provided an active vehicle suspension system for a surface vehicle having a payload compartment and a surface engaging device, comprising:
a controllable suspension element for applying a force between said payload compartment and said surface engaging device;
a profile sensor for sensing a profile of a path on which said vehicle is traveling, including vertical deflection of said path;
a profile storage device, for storing a plurality of profiles of paths, said profiles including vertical deflection data; and
a profile retrieving microprocessor, coupled to said profile sensor and to said profile storage device, for comparing said sensed profile with said plurality of stored profiles and retrieving from said profile storage device a stored profile corresponding to the path on which said vehicle is traveling; and
a control processor for issuing commands to said controllable suspension element based on the vertical deflection data associated with said retrieved profile.

The invention also includes a method for operating an active vehicle suspension in a surface vehicle, the method comprising:
sensing a vertical profile of a path;
recording the data of said vertical profile in a profile storage devicewhere a plurality of profiles of paths have been stored, said profiles including their vertical deflection data; and
comparing said recorded profile with profiles stored in said profile storage device;
retrieving from said profile storage device a stored profile corresponding to the path on which said vehicle is traveling; and
controlling said active vehicle suspension by commands issued from a control processor, the commands being based on the vertical deflection data associated with said retrieved profile.

Other specific features of the invention are to be found in the dependent claims of this specification.

Other features, objects, and advantages will become apparent from the following detailed description, which refers to the following drawings in which:
FIG 1 is a diagrammatic view of a vehicle having a controllable suspension;
FIG. 2a is a partially block diagram, partially diagrammatic representation of a controllable suspension according to the invention;
FIG. 2b is a partially block diagram, partially diagrammatic representation of a controllable suspension according to the invention;
FIG. 3 is a diagrammatic view of the operation of a prior art active suspension;
FIGS. 4a - 4c are diagrammatic views of the operation of an active suspension according to the invention;
FIG. 5 is a diagrammatic view of the operation of the operation of an active suspension according to the invention;
FIGS. 6a, 6b, and 6c are flow diagrams illustrating the operation of a suspension system according to the invention; and
FIG.7 is a diagrammatic view illustrating a method of trajectory development.

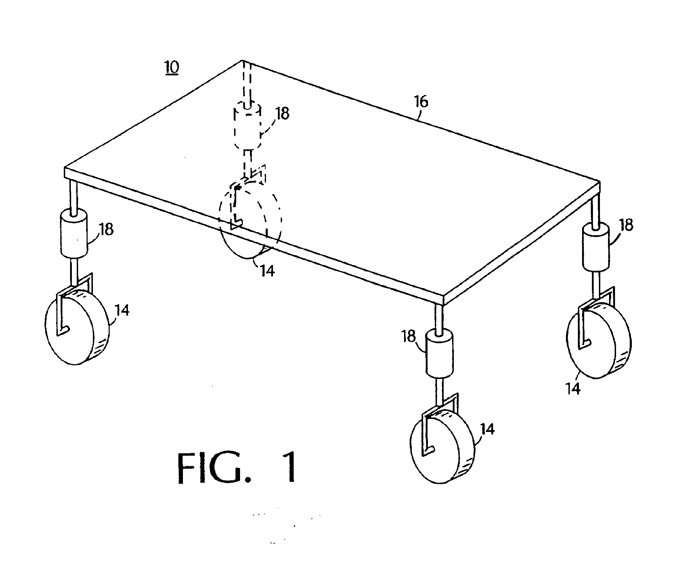

With reference now to the drawings and more particularly to FIG. 1, there is shown a diagrammatic view of a vehicle 10 according to the invention. A suspension system includes surface engaging devices, such as wheels 14 connected to payload compartment 16 (represented diagrammatically as a plane) of the vehicle by a controllable suspension element 18. In addition, the suspension system may include conventional suspension elements (not shown), such as a coil or leaf spring arrangement or damper. While one embodiment of the invention is an automobile, so that the surface engaging devices are wheels and the payload includes passengers, the invention may also be practiced in other types of vehicles, such as cargo carrying vehicles. Payload compartment 16 may be a planar structure or may be enclosed on some or all sides. The surface engaging devices may include tracks or runners. The invention may also be practiced in vehicles that engage the surface through some form of levitation, such as magnetic or pneumatic levitation, so that the surface engaging devices include devices that do not require physical contact with the surface, and so that the surface may include tracks or open terrain. For simplicity of explanation, the invention will be described as embodied in an automobile.

Controllable suspension elements 18 may be one of a variety of suspension elements that receive, or are capable of being adapted to receive, control signals from a microprocessor and to respond to the signals.

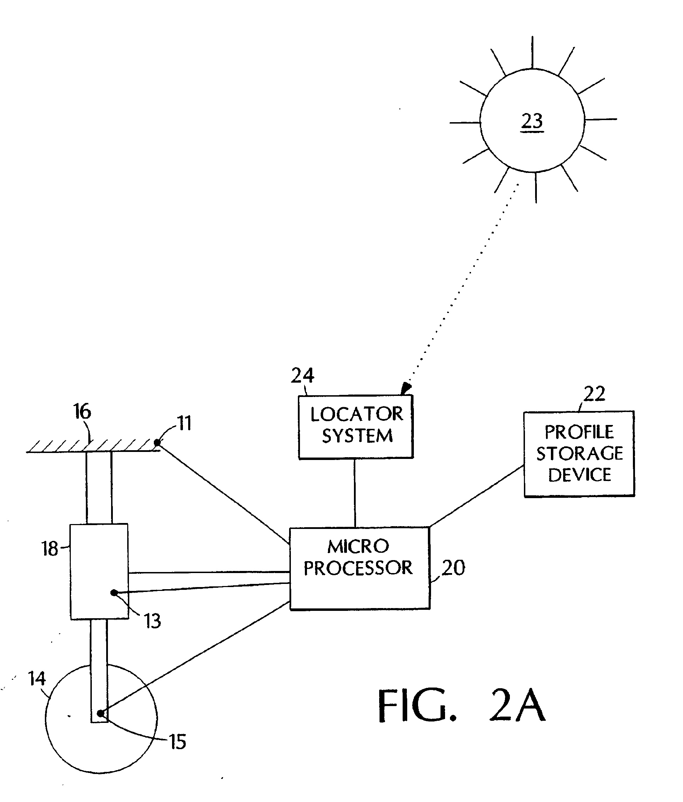

Controllable suspension elements 18 may be components of an active suspension system, in which the controllable suspension elements can respond to the control signals by varying the vertical displacement between the passenger compartment 16 and wheel 14 by applying a force. Suitable active suspension systems are described in U.S. Pat. Nos. 4,960,290 and 4,981,309 incorporated by reference herein. The force may be transmitted through some element such as a linear or rotary actuator, ball screw, pneumatic system, or hydraulic system, and may include intervening elements between the wheel and the force producing element. The controllable active suspension may also comprise an adaptive active vehicle suspension such as described in U.S. Pat. No. 5,432,700, in which signals may be used to modify adaptive parameters and gains. Controllable suspension elements 18 may also be components of a semi-active suspension system, which apply forces between passenger compartment 16 and wheel 14 reactively, in response to vertical forces resulting from wheel 14 passing over uneven surfaces. In semi-active suspension systems, the controllable suspension elements may respond to the control signals by extending or compressing a spring, by changing a damping rate, or in other ways. By way of example, the invention will be described in an embodiment in which the controllable suspension element is an active suspension element. Referring now to FIG. 2a, there is shown a block diagram of a suspension according to the invention. Controllable suspension element 18 is coupled to a microprocessor 20 which is in turn coupled to profile storage device 22 and optional locator system 24. The suspension system further includes sensors 11, 13, and 15 associated with payload compartment 16, controllable suspension elements 18, and wheels 14, respectively. Sensors, 11, 13, and 15 are coupled to microprocessor 20. Locator system 24 may receive signals from an external source, such as a positioning satellite 23. For convenience, only one of the controllable suspension elements 18 is shown. The remaining wheels 14, controllable suspension elements 18, and the respective sensors 11, 13, and 15 are coupled to microprocessor 20 substantially as shown in FIG. 2a.

Microprocessor 20 may be a single microprocessor as shown. Alternatively, the functions performed by microprocessor 20 may be performed by a number of microprocessors or equivalent devices, some of which can be located remotely from vehicle 10, and may wirelessly communicate with components of the suspension system, which are located on vehicle 10.

Profile storage device 22 may be any one of a number of types of writable memory storage, such as RAM, or mass storage devices such as a magnetic or writable optical disk. Profile storage device 22 may be included in the vehicle as shown, or may be at some remote location, with a broadcasting system for wirelessly communicating path profile data to the vehicle. Locator system 24 may be one of a number of systems for providing longitudinal and latitudinal position, such as the Global Positioning System (GPS) or an inertial navigation system (INS). Locator system 24 may include systems, which provide for user input to indicate location and also includes profile matching systems that compare the profile of the path being driven by the vehicle with the profiles stored in memory storage.

In one embodiment, the path being driven on is a roadway. However, the invention may be used in other types of vehicles that do not operate on roadways, such as open terrain vehicles and vehicles that operate on rails. The path can be typically defined by a location and a direction. By way of example, the invention will be described as embodied in an automobile for operating on a roadway.

A suspension system incorporating the invention may also include a trajectory planning subsystem, which includes (referring to FIG. 2a) microprocessor 20, profile storage device 22, and locator system 24.

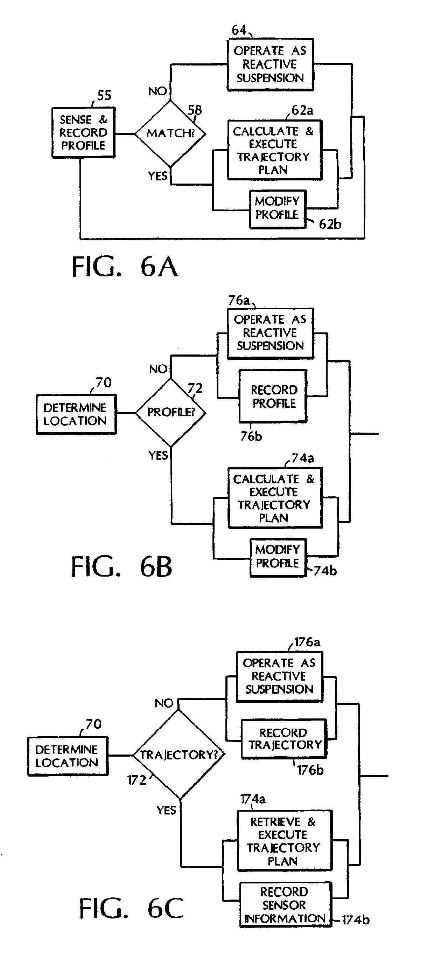

Locator system 24 detects the location of the vehicle, and microprocessor 20 retrieves a copy of the profile of the road, if available, from a plurality of profiles stored in profile storage device 22. Microprocessor 20 calculates or retrieves a trajectory plan responsive to the road profile, and issues control signals to controllable suspension element 18 to execute the trajectory plan. The profile retrieval, trajectory calculation, and suspension control may be performed by a single microprocessor as shown, or may be done by separate microprocessors if desired. The trajectory development process is described more fully in connection with FIGS. 6a and 6b. If controllable suspension element 18 is a semiactive suspension or an active suspension acting reactively to road forces, microprocessor 20 may issue an adjusted control signal to controllable suspension 16 based in part on the road profile.

In a typical form, a road profile includes a series of vertical (z-axis) displacements from a reference point. The z-axis displacement measurements are typically taken at uniform distances from the location taken in the direction of travel. A road profile can also contain additional data such as x-axis and y-axis displacement; compass heading; steering angle; or other information such as may be included in navigation systems, such as commercially available vehicle navigation products. The additional data may involve greater processing capability of microprocessor 20 and profile storage device 22, but may be advantageous in using "dead reckoning" or pattern matching techniques described below to more precisely locate the vehicle or in uniquely associating a road profile with a location. Additionally, the additional data may be advantageous in determining, for example, the degree to which traction should be considered in developing the trajectory.

A trajectory plan is a path in space of a point or set of points on the payload compartment. To control the pitch of the vehicle, the trajectory may represent at least two points, respectively forward and rearward in the payload compartment. To control the roll of the vehicle, the trajectory may represent at least two points, one on each side of the vehicle. In a four wheeled vehicle, it may be convenient to use for trajectory development four points in the payload compartment, one near each wheel. Pairs of the points could be averaged (such as averaging the two points on each side of the vehicle to consider roll in the development of the trajectory plan, or averaging the two points in the front and the rear, respectively, to consider pitch in the development of the trajectory plan). For simplicity of explanation, the invention will be described in terms of a single point. The microprocessor issues control signals to controllable suspension element 18 to cause the vehicle to follow the trajectory plan. More detail on trajectory plans and the execution of trajectory plans are set forth in the examples that follow.

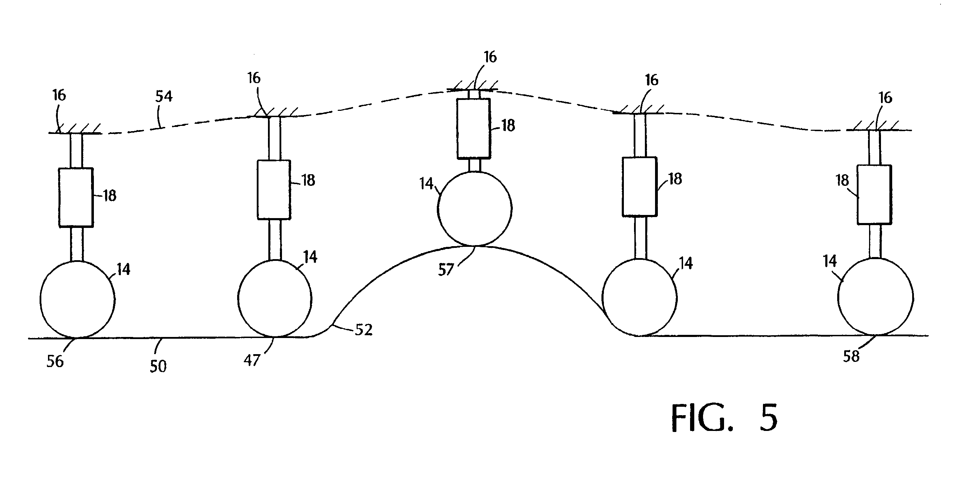

The trajectory plan may take a number of factors into account, for example matching the pitch or roll of the vehicle to the pitch or roll expected by the passengers; minimizing the vertical acceleration of the payload compartment; maximizing the stroke of the suspension available to absorb undulations in the road; minimizing the amplitude or occurrence of accelerations of an undesirable frequency, such as frequencies around 0.1 Hz, which tends to induce nausea; maximizing tire traction; or others. The trajectory plan may also include "anticipating" an undulation in the road and reacting to it before it is encountered, as will be described below in the discussion of FIG. 5. Further, particularly if the suspension system includes a conventional spring to support the weight of the car and the operation of the active suspension element extends or compresses the conventional spring, the trajectory plan may take power consumption into account.

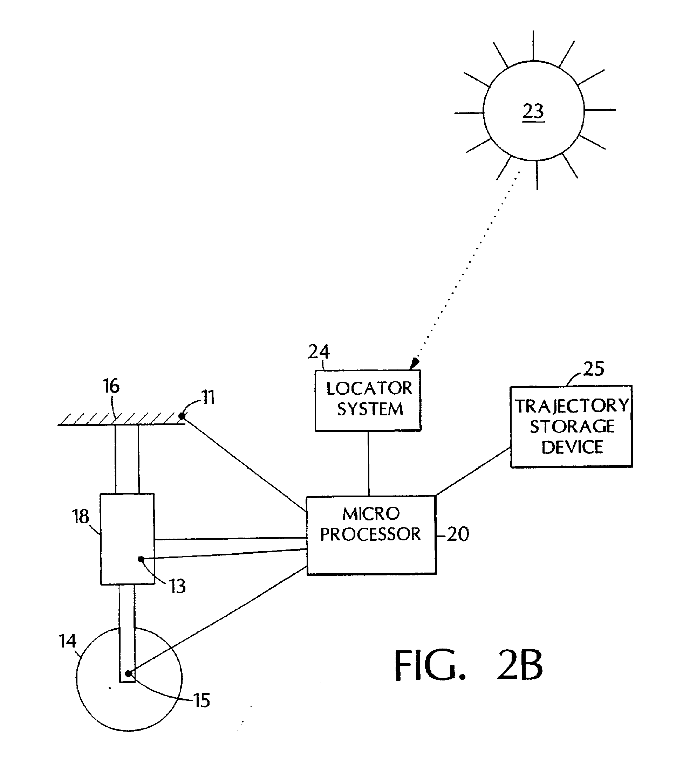

Referring now to FIG. 2b, there is shown another embodiment of the invention incorporating a trajectory storage device 25. Elements of FIG. 2b are similar to elements of FIG. 2a, except profile device 22 of FIG. 2a is replaced by a trajectory storage device 25. Trajectory storage device 25 may be any one of a number of types of writable memory storage, such as RAM, or mass storage devices such as a magnetic or writable optical disk. Profile storage device 22 may be included in the vehicle as shown, or may be at some remote location, with a broadcasting system for wirelessly communicating path profile data to the vehicle.

Operation of the embodiment of FIG. 2b is similar to the operation of the embodiment of FIG. 2a, except that microprocessor 20 retrieves and calculates trajectory plans that are associated with locations rather than being associated with profiles.

Another embodiment of the invention includes both the profile storage device of FIG. 2a and the trajectory storage device of FIG. 2b. In an embodiment including both profile storage device 22 and trajectory storage device 25, the storage devices may be separate devices or may be different portions of a single memory device. Operation of embodiments including trajectory storage device 25 are described further in the discussion of FIG. 6c.

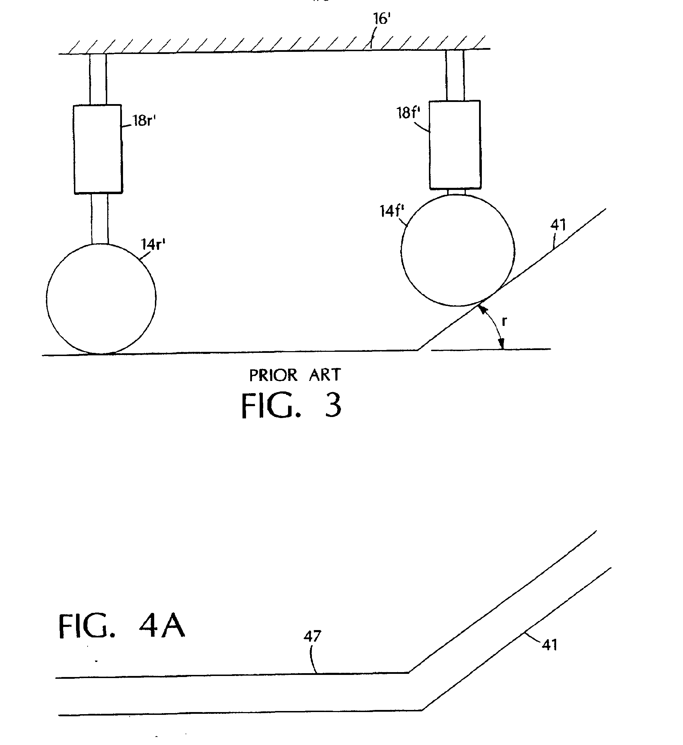

FIG. 3 shows an example of the operation of a conventional active suspension without a trajectory planning subsystem. In FIG. 3, when front wheel 14f' encounters sloped section 41, active suspension element 18f' exerts a force to shorten the distance between payload compartment 16' and front wheel 14f'. When the rise *r* due to the slope approaches the maximum lower displacement of the suspension element, suspension element 14f' is "nosed in" to slope 41, and in extreme cases may reach or approach a "bottomed out" condition, such that there is little or no suspension travel left to accommodate bumps in the rising surface.

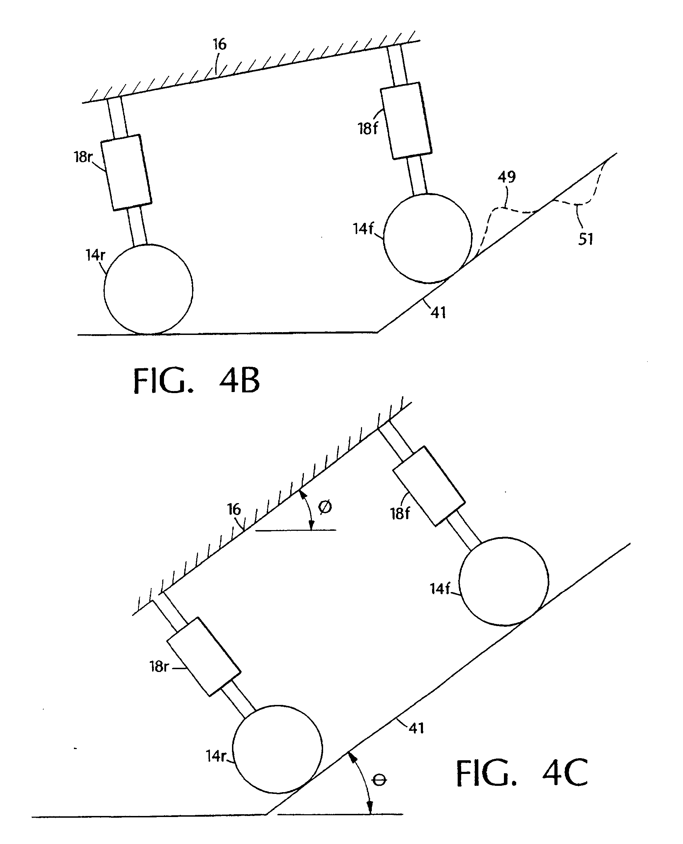

Referring now to FIGS. 4a - 4c, there is shown an example of the operation of an active suspension according to the invention. Microprocessor 20 of FIG. 2a furnishes a computed trajectory 47, which closely matches the road surface, including sloped section 41, and issues appropriate control signals to active suspension elements 18f and 18r to follow the trajectory. In this example, the trajectory can be followed by exerting no force to shorten or lengthen the distance between wheels 14f and 14r and payload compartment 16, or if the suspension system includes a conventional spring, the trajectory can be followed by exerting only enough force to counteract acceleration resulting from force exerted by the spring. In FIG. 4b, when the vehicle has reached the same position in the road as in FIG. 3, payload compartment 16 is tilted slightly. In FIG. 4c, the payload compartment is tilted at an angle which matches the tilt of the road. The gradual tilt of the payload compartment to match the tilt of the road matches rider expectations. An additional advantage is that if there is a bump 49 or depression 51 in the road, the full stroke of the suspension is available to absorb the bump or depression.

The example of FIGS. 4a - 4c illustrates the principle that following the trajectory may occur with little or no force being applied by the controllable suspension element 18 and that execution of the trajectory planning subsystem may override the normal operation of an active suspension. In FIGS. 4b and 4c, the vehicle is experiencing upward acceleration, and the normal operation of the active suspension would shorten the distance between wheel 14f and the payload compartment 16. However, since the payload compartment 16 is following the trajectory plan, microprocessor 20 issues a control signal that overrides the normal operation of the active suspension, thereby allowing the vehicle to follow the trajectory plan.

FIG. 5 shows another example of the operation of an active suspension with a trajectory planning subsystem. Road profile 50 includes a large bump 52. Microprocessor 20 (of FIG. 2a or 2b) furnishes a computed trajectory 54 appropriate for road profile 50 and issues corresponding control signals to controllable suspension element 18. In response to the control signals, at point 56, before wheel 14 has encountered bump 52, controllable suspension element 18 exerts a force to gradually lengthen the distance between wheel 14 and payload compartment 16. As wheel 14 travels over bump 52, the normal operation of the controllable suspension element 18 causes controllable suspension element 18 to exert a force, which shortens the distance between payload compartment 16 and wheel 14. When wheel 14 reaches the crown 57 of bump 52, controllable suspension element 18 begins to exerts a force, which lengthens the distance between payload compartment 16 and wheel 14. After wheel 14 has passed the end of bump 52, controllable suspension element 18 exerts a force shortening the distance between payload compartment 16 and wheel 14. The example of FIG. 5 illustrates the principle that the trajectory planning subsystem may cause the controllable suspension element 18 to exert a force to lengthen or shorten the distance between wheel 14 and payload compartment 16 even on a level road and further illustrates the principle that the trajectory plan may cause the controllable suspension element to react to a bump or depression in the road before the bump or depression is encountered.

The example of FIG. 5 illustrates several advantages of a suspension system according to the invention. By beginning to react to bump 52 before bump 52 is encountered and by continuing to react to the bump after the bump has been passed, the vertical displacement of the payload compartment is spread over a larger distance and over a longer period of time than if the suspension system reacted to bump 52 when the tire encountered bump 52. Thus, the vertical displacement, vertical velocity and vertical acceleration of payload compartment 16 are low, so passengers encounter less discomfort than with a suspension system without trajectory planning. The trajectory planning subsystem effectively provides for large bump 52, and the normal operation of the controllable suspension element is still available to handle perturbations that are not indicated in the road profile. If the road profile has sufficient resolution to only identify large perturbations such as large bump 52, or long or substantial slopes, or if the road profile is somewhat inaccurate, the active suspension element in normal operating mode need only react to the *difference* between the profile and the actual road surface. For example, if the actual profile of large bump 52 is slightly different from the stored profile on which the trajectory plan is based, the active suspension system need only provide for the difference between the actual and the stored profile of bump 52. Thus, even if the profile is imperfect, the ride experienced by the passengers in the vehicle is typically better than if the suspension lacks the trajectory planning feature.

The trajectory plan may take perceptual thresholds of vehicle occupants into account. For example, in FIG. 5, even less vertical acceleration would be encountered by the occupants of the vehicle if the trajectory plan began rising before point 56 and returned the vehicle to the equilibrium position after point 58. However, the difference in vertical acceleration may not be enough to be perceived by the vehicle occupants, so the active suspension need not react before point 56 or continue to react past point 58. Additionally, if the vehicle includes a conventional suspension spring, the force applied by the active suspension between points 56 and 47 may need to exert a force to extend the spring in addition to a force to lift the vehicle, so not beginning the rise of the trajectory plan until point 56 may consume less power than beginning the rise earlier.

Referring now to FIG. 6a, there is shown a method for developing, executing, and modifying a trajectory plan by a system without optional locator system 24. At step 55, sensors 11, 13, 15 collect road profile information and transmit the information to microprocessor 20 which records the road profile in profile storage device 22. At step 58, the profile microprocessor compares the road profile information with road profiles that have been previously stored in profile storage device 22. The comparison may be accomplished using a pattern matching system as described below. If the road profile information matches a road profile that has previously been stored, at step 62a, the profile is retrieved, and microprocessor 20 furnishes a computed trajectory plan appropriate for that profile. Concurrently, at step 62b, sensors 11, 13, 15 furnish signal representations of the road profile that may be used to modify, if necessary, the profile stored in profile storage device 22.

If it is determined at step 58 that there is no previously stored road profile that matches the road profile information collected in step 56, at step 64 controllable suspension element 18 acts as a reactionary active suspension.

Referring now to FIG. 6b, there is shown a method for developing, modifying, and executing a trajectory plan by a system that includes optional locator system 24. At step 70, locator system 24 determines the location and direction of the vehicle. At step 72 trajectory microprocessor 20 examines stored profiles in profile storage device 22 to see if there is a profile associated with that location. If there is a profile associated with that location, at step 74a microprocessor 20 retrieves the profile and transmits the retrieved profile information to controllable suspension element 18, which executes the trajectory plan. Depending on how the data is stored and processed, step 72 may also consider direction of travel in addition to location in determining whether there is an associated profile. Concurrently, at step 74b, sensors 11, 13, 15 provide signals representative of the road profile that may be used to modify, if necessary, the profile stored in profile storage device 22.

If it is determined at step 72 that there is no previously stored road profile associated with that location and direction, at step 76a controllable suspension 18 acts as a reactionary active suspension. Concurrently, at step 76b, sensors 11, 13, 15 furnish signals representative of the road profile, which is stored in profile storage device 22.

Referring now to FIG. 6c, there is shown a method for developing, modifying, and executing a trajectory plan in an embodiment of the invention as shown in FIG. 2b and having some device to locate the vehicle, such as the locator system 24, or the profile storage device 22 of FIG. 2a. At step 70, locator system 24 determines the location and direction of the vehicle. At step 172 trajectory microprocessor 20 examines trajectory plans in trajectory plan storage device 25 to see if there is a trajectory plan associated with that location. If there is a profile associated with that location, at step 174a microprocessor 20 retrieves the profile and transmits the information to controllable suspension element 18, which executes the trajectory plan. Depending on how the data is stored and processed, step 172 may also consider direction of travel in addition to location in determining whether there is an associated profile. Concurrently, at step 174b, signals from sensors 11, 13, 15 representative of the actual profile may be recorded so that the trajectory plan associated with the location can later be modified to provide a smoother or more comfortable ride.

If it is determined at step 172 that there is no previously stored road profile associated with that location and direction, at step 176a controllable suspension 18 acts as a reactionary active suspension. Concurrently, at step 176b, signals representative of the trajectory resulting from the reactionary operation of the controllable suspension 18 are recorded so that the stored trajectory can be modified to provide a smoother or more comfortable ride.

The methods of FIG. 6a, 6b, and 6c illustrate one of the learning features of the invention. Each time the vehicle is driven over a portion of road, the profile or trajectory, or both, may be modified, so that the trajectory furnished by microprocessor 20 may be used to provide for a smoother ride for the occupants of the vehicle during subsequent rides over the same portion of road.

It is desirable to determine the location of the vehicle accurately, ideally within one meter, though an active suspension with a locator system having a lesser degree of precision performs better than conventional active suspensions. One method of attaining a high degree of precision is to include in locator system 24 of FIG. 2a incorporating a high precision GPS system, such as a differential system accurate to within centimeters. Another method is to include in locator system 24 of FIG. 2a a GPS system having a lower degree of precision (such as a non-differential system accurate to within about 50 meters or some other locator system not incorporating GPS) and a supplementary pattern matching system according to the invention as claimed.

In one pattern matching system, search for a known sequence of data in a target string of data. One method of pattern matching particularly useful for data that increases and decreases from a base point includes multiplying a known sequence of n numbers by strings of corresponding length in the target string. The n products are then summed, and when the strings match, the sum peaks. Supplementary or additional pattern matching techniques, such as continuous pattern matching or matching consecutive groups of n products can be used to minimize the occurrence of false matches.

This form of pattern matching can be usefully applied to a trajectory planning active suspension by recording a pattern of z-axis deflections from a base point and using the pattern of z-axis deflections as the search string. Pattern matching can then be used in at least two ways. In one application, the GPS system is used to get an approximate (within 30 meters) location of the vehicle, and pattern matching is then used to locate the vehicle more precisely, by using for the target string, the previously recorded pattern of z-axis deflections stored in profile storage device 22 of FIG. 2a. In a second application, pattern matching is used to compare the pattern of z-axis deflections as measured by sensor 15 of FIG. 2a with patterns of z-axis deflections stored in profile storage device 22 to determine if there is a profile stored in memory.

To supplement the GPS and pattern matching system, a "dead reckoning" system may also be used. In a dead reckoning system, a vehicle change in location is estimated by keeping track of the distance the vehicle travels and the direction the vehicle travels. When the vehicle has been located precisely, the distance the vehicle travels may be tracked by counting wheel rotations, and the direction of travel may be tracked by recording the wheel angle or steering angle. A dead reckoning system is very useful if GPS readings are difficult (such as if there are nearby tall buildings) and also reduces the frequency at which GPS readings need be taken.

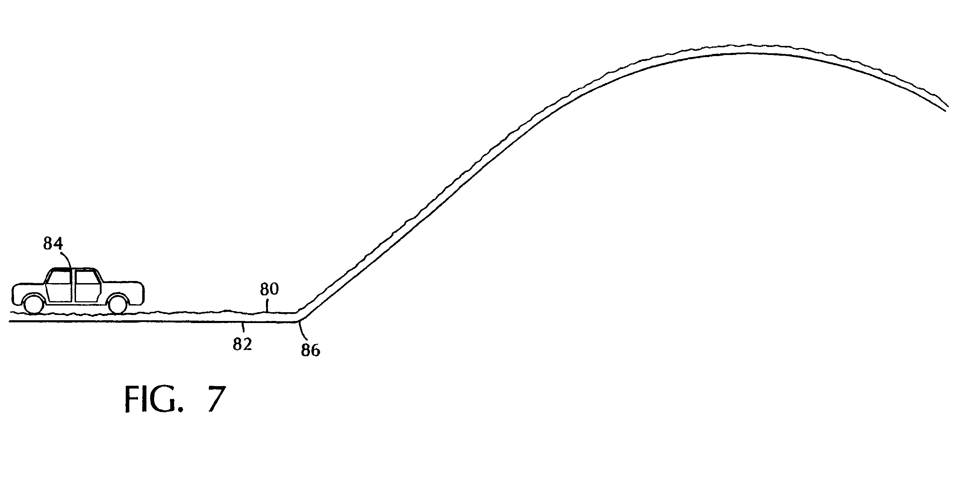

Referring now to FIG. 7, there is shown a diagrammatic view of an automobile and a road surface, illustrating the development of a trajectory. Line 80 represents the road profile as stored by profile device 22 of FIG. 2a. Line 82 represents the road profile 80 which has been bidirectionally low-pass filtered using a break frequency in the range of 1 Hz, and is used as the trajectory; the bidirectional filtering eliminates phase lag inaccuracies that may be present with single directional filtering. When the automobile 84 passes over the road surface represented by line 80, microprocessor 20 of FIG. 2a issues command signals to controllable suspension element 18 of FIG. 2a to urge the payload compartment of automobile 84 to follow the trajectory represented by line 82. The high frequency, low amplitude undulations in the road are easily handled by the normal operation of the active suspension. Developing of a trajectory by low pass filtering is very useful in dealing with the situation as described in FIGS. 3 and 4a - 4c.

Processing the road profile data in the time domain to develop trajectory plans is advantageous when the velocity of the vehicle is constant; that is, each trip across the road segment is at the same velocity.

In some circumstances, processing the data in the spatial domain may be more useful than processing the data in the time domain. It may be more convenient to store data in spatial form, and processing the data in the spatial domain may make it unnecessary to transform the data to temporal form. Additionally, processing the data in the spatial domain allows the trajectory to be calculated including velocity as a variable; that is, the trajectory may vary, depending on the velocity. If the data is processed in the spatial domain, it may be advisable to perform some amount of time domain translation, for example to minimize acceleration at objectionable frequencies, such as the 0.1 Hz "seasick" frequency.

Trajectory development may take into account factors in addition to the spatial or time domain filtered road profile. For example, the trajectory may take into account large dips or bumps in the road as shown in FIG. 5, and discussed in the corresponding portion of the disclosure.

There has been described novel apparatus and techniques for vertical trajectory planning. It is evident that those skilled in the art may now make numerous modifications and uses of and departures from the specified apparatus and techniques disclosed herein. Consequently, the invention is to be construed as embracing each and every novel feature and novel combination of features present in or possessed by the apparatus and techniques disclosed herein and limited only by the spirit and scope of the appended claims.

## Claims

1. An active vehicle suspension system for a surface vehicle (10) having a payload compartment (16) and a surface engaging device (14), comprising:
a controllable suspension element (18) for applying a force between said payload compartment and said surface engaging device;
a profile sensor (11,13,15) for sensing a profile of a path on which said vehicle is traveling, including vertical deflection of said path;
a profile storage device (22), for storing a plurality of profiles of paths, said profiles including vertical deflection data;
a profile retrieving microprocessor (20), coupled to said profile sensor and to said profile storage device, for comparing said sensed profile with said plurality of stored profiles and retrieving from said profile storage device a stored profile corresponding to the path on which said vehicle is traveling; and
a control processor (20) for issuing commands to said controllable suspension element (18) based on the vertical deflection data associated with said retrieved profile.

2. An active vehicle suspension system in accordance with claim 1, wherein said profile storage device (22) is located remotely from said surface vehicle (10).

3. An active vehicle suspension system in accordance with claim 2, wherein said profile retrieving microprocessor (20) is located remotely form said surface vehicle (10).

4. An active vehicle suspension system in accordance with claim 2, further comprising
a locator system (24), coupled to said microprocessor (20), for determining the location of said surface vehicle (10), wherein said microprocessor is adapted to determine if there is stored in said profile storage device a profile corresponding to said location

5. An active vehicle suspension system in accordance with claim 2, further comprising a trajectory developing microprocessor (20) for developing a trajectory plan corresponding to said retrieved profile.

6. An active vehicle suspension system in accordance with claim 5, wherein the control processor (20) issues commands to said controllable suspension element (18) to execute said trajectory plan.

7. An active suspension system in accordance with claim 1, said controllable suspension element (18) comprising:
a force applying element coupling said payload compartment (16) and said surface engaging device (14), for applying a force between said payload compartment and said surface engaging device to vary the vertical position of said payload compartment relative to said surface engaging device, said suspension system further comprising a trajectory development subsystem (25), communicatingly coupled to said force applying element and to said profile storage device (22), for developing a trajectory plan responsive to one of said stored plurality of vertical profiles and for issuing commands to said force applying element, said commands corresponding to said trajectory plan.

8. An active suspension system in accordance with claim 7, wherein said profile storage device (22) is located remotely from said surface vehicle.

9. An active suspension system in accordance with claim 7, wherein said trajectory development subsystem (25) is located remotely from said surface vehicle.

10. An active suspension system in accordance with claim 1, further comprising a trajectory storage device (25) for storing a database of trajectories, said trajectories corresponding to said road profiles;
a trajectory microprocessor (20) electronically coupled to said storage device and to said road profile microprocessor (20) and responsive to said road profile microprocessor for retrieving one of said trajectories and for communicating instructions, based on said one trajectory, to said active suspension.

11. An active suspension system in accordance with claim 10, wherein said trajectory storage device (25) is located remotely from said surface vehicle

12. An active suspension system in accordance with claim 10, wherein said trajectory microprocessor (20) is located remotely from said surface vehicle.

13. An active suspension system in accordance with claim 1, further comprising a trajectory development microprocessor (20) electronically coupled to active suspension for developing a vertical trajectory for said sensed profile.

14. An active suspension system in accordance with claim 1, further comprising:
a locator system (24) for determining the location of said surface vehicle;
a trajectory storage device (25), for storing a database of trajectories corresponding to locations; and
a trajectory microprocessor (20) for determining if said database contains a trajectory corresponding to said determined location, for retrieving said corresponding trajectory, and for transmitting to said active suspension instructions, based on said corresponding trajectory.

15. An active suspension system in accordance with claim 14, wherein said locator system (24) comprises a global positioning system device.

16. A method for operating an active vehicle suspension in a surface vehicle (10), the method comprising:
sensing a vertical profile of a path;
recording the data of said vertical profile in a profile storage device (22), where a plurality of profiles of paths have been stored, said profiles including their vertical deflection data; and
comparing said recorded profile with profiles stored in said profile storage device;
retrieving from said profile storage device a stored profile corresponding to the path on which said vehicle is traveling; and
controlling said active vehicle suspension by commands issued from a control processor (20), the commands being based on the vertical deflection data associated with said retrieved profile.

17. A method for operating an active vehicle suspension in accordance with claim 16, further comprising
retrieving, responsive to a finding that said sensed profile matches one of said stored profiles, a trajectory plan associated with said one stored profile; and
executing said trajectory plan.

18. A method for operating an active vehicle suspension in accordance with claim 16, further comprising
recording input from performance sensors;
modifying, responsive to said performance sensor input, said vertical trajectory plan.

19. A method for operating an active vehicle suspension in accordance with claim 16, further comprising
responsive to a finding that said sensed profile matches one of said stored profiles, developing a trajectory plan for said sensed profile; and
executing said trajectory plan.

20. A method for operating an active vehicle suspension system in accordance with claim 16, further comprising:
determining the location of said surface vehicle (10);
determining if there is stored in said surface vehicle a vertical trajectory plan corresponding to said location;
responsive to a determination that there is stored in said vehicle suspension system said vertical trajectory plan, retrieving said plan; and
executing said trajectory plan.

21. A method for operating an active vehicle suspension in accordance with claim 20, further comprising
recording input from performance sensors;
modifying, responsive to said performance sensor input, said vertical trajectory plan.

22. A method for operating an active suspension in accordance with claim 20, wherein said determining step includes the use of a global positioning satellite.

23. A method for operating an active vehicle suspension system in accordance with claim 16, further comprising:
determining the location of said surface vehicle (10);
determining if there is stored in said surface vehicle a profile corresponding to said location;
responsive to a determination that there is stored in said vehicle said profile, retrieving said profile;
developing, responsive to said retrieved profile, a trajectory plan; and
executing said trajectory plan.

24. A method for operating an active vehicle suspension in accordance with claim 23, further comprising the steps of
modifying said profile; and
storing said modified profile in said storage device.

25. A method in accordance with claim 16, wherein said path profiles are associated with locations and contain data specifically representative of vertical deflections of said path, measured at increments, said method further comprising:
in the event that said recorded profile matches one of said stored profiles, determining the location of said surface vehicle (10) by identifying the location associated with a matched one of said stored profiles.

## Patentansprüche

1. Aktives Fahrzeugaufhängungssystem für ein Oberflächenfahrzeug (10), das ein Nutzlastabteil (16) und eine Oberflächeneingriffseinrichtung (14) hat, wobei das System Folgendes umfasst:
ein regelbares Aufhängungselement (18) zum Ausüben einer Kraft zwischen dem Nutzlastabteil und der Oberflächeneingriffseinrichtung,
einen Profilsensor (11, 13, 15) zum Abfühlen eines Weges, auf dem sich das Fahrzeug bewegt, einschließlich einer vertikalen Auslenkung des Weges,
eine Profilspeicherungseinrichtung (22) zum Speichern von mehreren Profilen von Wegen, wobei die Profile vertikale Auslenkungsdaten einschließen,
einen Profilabruf-Mikroprozessor (20), der an den Profilsensor und an die Profilspeicherungseinrichtung gekoppelt ist, um das abgefühlte Profil mit den mehreren gespeicherten Profilen zu vergleichen und aus der Profilspeicherungseinrichtung ein gespeichertes Profil abzurufen, das dem Weg, auf dem sich das Fahrzeug bewegt, entspricht, und
einen Steuerungsmikroprozessor (20) zum Ausgeben von Kommandos an das regelbare Aufhängungselement (18) auf der Grundlage der mit dem abgerufenen Profil verknüpften vertikalen Auslenkungsdaten.

2. Aktives Fahrzeugaufhängungssystem nach Anspruch 1, wobei die Profilspeicherungseinrichtung (22) entfernt von dem Oberflächenfahrzeug (10) angeordnet ist.

3. Aktives Fahrzeugaufhängungssystem nach Anspruch 2, wobei der Profilabruf-Mikroprozessor (20) entfernt von dem Oberflächenfahrzeug (10) angeordnet ist.

4. Aktives Fahrzeugaufhängungssystem nach Anspruch 2, das ferner Folgendes umfasst:
ein Lokalisierungssystem (24), das an den Mikroprozessor (20) gekoppelt ist, um den Standort des Oberflächenfahrzeugs (10) zu bestimmen, wobei der Mikroprozessor dafür eingerichtet ist, festzustellen, ob in der Profilspeicherungseinrichtung ein Profil, das dem Standort entspricht, gespeichert ist.

5. Aktives Fahrzeugaufhängungssystem nach Anspruch 2, das ferner einen Bahnentwicklungsmikroprozessor (20) umfasst, um einen Bahnplan, der dem abgerufenen Profil entspricht, zu entwickeln.

6. Aktives Fahrzeugaufhängungssystem nach Anspruch 5, wobei der Steuerungsmikroprozessor (20) Kommandos an das regelbare Aufhängungselement (18) ausgibt, um den Bahnplan auszuführen.

7. Aktives Fahrzeugaufhängungssystem nach Anspruch 1, wobei das regelbare Aufhängungselement (18) Folgendes umfasst:
ein Kraftausübungselement, welches das Nutzlastabteil (16) und die Oberflächeneingriffseinrichtung (14) koppelt, um eine Kraft zwischen dem Nutzlastabteil und der Oberflächeneingriffseinrichtung auszuüben, um die vertikale Stellung des Nutzlastabteils im Verhältnis zu der Oberflächeneingriffseinrichtung zu verändern, wobei das Aufhängungssystem ferner ein Bahnentwicklungsuntersystem (25) umfasst, das kommunizierend an das Kraftausübungselement und an die Profilspeicherungseinrichtung (22) gekoppelt ist, um als Reaktion auf eines der mehreren gespeicherten vertikalen Profile einen Bahnplan zu entwickeln und um Kommandos an das Kraftausübungselement auszugeben, wobei die Kommandos dem Bahnplan entsprechen.

8. Aktives Fahrzeugaufhängungssystem nach Anspruch 7, wobei die Profilspeicherungseinrichtung (22) entfernt von dem Oberflächenfahrzeug angeordnet ist.

9. Aktives Fahrzeugaufhängungssystem nach Anspruch 7, wobei das Bahnentwicklungsuntersystem (25) entfernt von dem Oberflächenfahrzeug angeordnet ist.

10. Aktives Fahrzeugaufhängungssystem nach Anspruch 1, das ferner Folgendes umfasst:
eine Bahnspeicherungseinrichtung (25) zum Speichern einer Datenbank von Bahnen, wobei die Bahnen den Straßenprofilen entsprechen,
einen Bahnmikroprozessor (20), der elektronisch an die Speicherungseinrichtung und an den Straßenprofil-Mikroprozessor (20) gekoppelt ist und auf den Straßenprofil-Mikroprozessor anspricht, um eine der Bahnen abzurufen und um, auf der Grundlage der einen Bahn, Anweisungen an die aktive Aufhängung zu übermitteln.

11. Aktives Fahrzeugaufhängungssystem nach Anspruch 10, wobei die Bahnspeicherungseinrichtung (25) entfernt von dem Oberflächenfahrzeug angeordnet ist.

12. Aktives Fahrzeugaufhängungssystem nach Anspruch 10, wobei der Bahnmikroprozessor (20) entfernt von dem Oberflächenfahrzeug angeordnet ist.

13. Aktives Fahrzeugaufhängungssystem nach Anspruch 1, das ferner einen Bahnentwicklungsmikroprozessor (20) umfasst, der elektronisch an die aktive Aufhängung gekoppelt ist, um eine vertikale Bahn für das abgefühlte Profil zu entwickeln.

14. Aktives Fahrzeugaufhängungssystem nach Anspruch 1, das ferner Folgendes umfasst:
ein Lokalisierungssystem (24), um den Standort des Oberflächenfahrzeugs zu bestimmen,
eine Bahnspeicherungseinrichtung (25) zum Speichern einer Datenbank von Bahnen, die Standorten entsprechen, und
einen Bahnmikroprozessor (20), um festzustellen, ob die Datenbank eine Bahn, die dem bestimmten Standort entspricht, enthält, um die entsprechende Bahn abzurufen und um, auf der Grundlage der entsprechenden Bahn, Anweisungen an die aktive Aufhängung zu übermitteln.

15. Aktives Fahrzeugaufhängungssystem nach Anspruch 14, wobei das Lokalisierungssystem (24) ein Global-Positioning-System-Gerät umfasst.

16. Verfahren zum Betreiben einer aktiven Fahrzeugaufhängung in einem Oberflächenfahrzeug (10), wobei das Verfahren Folgendes umfasst:
das Abfühlen eines vertikalen Profils eines Weges,
das Aufzeichnen der Daten des vertikalen Profils in einer Profilspeicherungseinrichtung (22), wo mehrere Profile von Wegen gespeichert worden sind, wobei die Profile ihre vertikalen Auslenkungsdaten einschließen, und
das Vergleichen des aufgezeichneten Profils mit den in der Profilspeicherungseinrichtung gespeicherten Profilen,
das Abrufen eines gespeicherten Profils, das dem Weg, auf dem sich das Fahrzeug bewegt, entspricht, aus der Profilspeicherungseinrichtung, und
das Steuern der aktiven Fahrzeugaufhängung durch von einem Steuerungsprozessor (20) ausgegebene Kommandos, wobei die Kommandos aus den mit dem abgerufenen Profil verknüpften vertikalen Auslenkungsdaten beruhen.

17. Verfahren zum Betreiben einer aktiven Fahrzeugaufhängung nach Anspruch 16, das ferner Folgendes umfasst:
als Reaktion auf eine Feststellung, dass das abgefühlte Profil mit einem der gespeicherten Profile übereinstimmt, das Abrufen eines Bahnplans, der mit dem einen gespeicherten Profil verknüpft ist, und
das Ausführen des Bahnplans.

18. Verfahren zum Betreiben einer aktiven Fahrzeugaufhängung nach Anspruch 16, das ferner Folgendes umfasst:
das Aufzeichnen einer Eingabe von Leistungssensoren,
das Modifizieren des vertikalen Bahnplans als Reaktion auf die Leistungssensor-Eingabe.

19. Verfahren zum Betreiben einer aktiven Fahrzeugaufhängung nach Anspruch 16, das ferner Folgendes umfasst:
als Reaktion auf eine Feststellung, dass das abgefühlte Profil mit einem der gespeicherten Profile übereinstimmt, das Entwickeln eines Bahnplans für das abgefühlte Profil, und
das Ausführen des Bahnplans.

20. Verfahren zum Betreiben eines aktiven Fahrzeugaufhängungssystems nach Anspruch 16, das ferner Folgendes umfasst:
das Bestimmen des Standortes des Oberflächenfahrzeugs (10),
das Feststellen, ob in dem Oberflächenfahrzeug ein vertikaler Bahnplan, der dem Standort entspricht, gespeichert ist,
als Reaktion auf eine Feststellung, dass der vertikale Bahnplan in dem Fahrzeugaufhängungssystem gespeichert ist, das Abrufen des Plans, und
das Ausführen des Bahnplans.

21. Verfahren zum Betreiben einer aktiven Fahrzeugaufhängung nach Anspruch 20, das ferner Folgendes umfasst:
das Aufzeichnen einer Eingabe von Leistungssensoren,
das Modifizieren des vertikalen Bahnplans als Reaktion auf die Leistungssensor-Eingabe.

22. Verfahren zum Betreiben einer aktiven Fahrzeugaufhängung nach Anspruch 20, wobei der Bestimmungsschritt die Verwendung eines Global-Positioning-Satelliten einschließt.

23. Verfahren zum Betreiben eines aktiven Fahrzeugaufhängungssystems nach Anspruch 16, das ferner Folgendes umfasst:
das Bestimmen des Standortes des Oberflächenfahrzeugs (10),
das Feststellen, ob in dem Oberflächenfahrzeug ein Profil, das dem Standort entspricht, gespeichert ist,
als Reaktion auf eine Feststellung, dass das Profil in dem Fahrzeug gespeichert ist, das Abrufen des Profils,
als Reaktion auf das abgerufene Profil das Entwickeln eines Bahnplans, und
das Ausführen des Bahnplans.

24. Verfahren zum Betreiben einer aktiven Fahrzeugaufhängung nach Anspruch 23, das ferner die folgenden Schritte umfasst:
das Modifizieren des Profils, und
das Speichern des modifizierten Profils in der Speicherungseinrichtung.

25. Verfahren nach Anspruch 16, wobei die Wegprofile mit Standorten verknüpft sind und Daten, die inkrementell gemessene vertikale Auslenkungen des Weges darstellen, enthalten, wobei das Verfahren ferner Folgendes umfasst:
in dem Fall, dass das ausgezeichnete Profil einem der gespeicherten Profile entspricht, das Bestimmen des Standortes des Oberflächenfahrzeugs (10) durch das Identifizieren des Standortes, der mit einem übereinstimmenden der gespeicherten Profile verknüpft ist.

## Revendications

1. Système de suspension active de véhicule pour un véhicule de surface (10) ayant un compartiment de charge utile (16) et un dispositif d'engagement de surface (14), comprenant :
un élément de suspension contrôlable (18) permettant d'appliquer une force entre ledit compartiment de charge utile et ledit dispositif d'engagement de surface ;
un capteur de profil (11, 13, 15) permettant de détecter un profil d'un chemin sur lequel ledit véhicule circule, incluant une déflexion verticale dudit chemin ;
un dispositif de stockage de profils (22), permettant de stocker une pluralité de profils de chemin, lesdits profils incluant des données de déflexion verticale ;
un microprocesseur de récupération de profil (20), couplé au capteur de profil et audit dispositif de stockage de profils, permettant de comparer ledit profil détecté avec ladite pluralité de profils stockés et de récupérer à partir dudit dispositif de stockage de profils un profil stocké correspondant au chemin sur lequel ledit véhicule circule ; et
un processeur de commande (20) permettant d'émettre des ordres audit élément de suspension contrôlable (18) sur la base des données de déflexion verticale associées audit profil récupéré.

2. Système de suspension active de véhicule selon la revendication 1, dans lequel ledit dispositif de stockage de profils (22) est situé à distance dudit véhicule de surface (10).

3. Système de suspension active de véhicule selon la revendication 2, dans lequel ledit microprocesseur de récupération de profil (20) est situé à distance dudit véhicule de surface (10).

4. Système de suspension active de véhicule selon la revendication 2, comprenant en outre
un système localisateur (24) couplé audit microprocesseur (20), permettant de déterminer l'emplacement dudit véhicule de surface (10), dans lequel ledit microprocesseur est adapté pour déterminer si un profil correspondant audit emplacement est stocké dans ledit dispositif de stockage de profils.

5. Système de suspension active de véhicule selon la revendication 2, comprenant en outre un microprocesseur de développement de trajectoire (20) permettant de développer un plan de trajectoire correspondant audit profil récupéré.

6. Système de suspension active de véhicule selon la revendication 5, dans lequel le processeur de commande (20) émet des ordres audit élément de suspension contrôlable (18) pour qu'il exécute ledit plan de trajectoire.

7. Système de suspension active selon la revendication 1, ledit élément de suspension contrôlable (18) comprenant :
un élément d'application de force couplant ledit compartiment de charge utile (16) et ledit dispositif d'engagement de surface (14), permettant d'appliquer une force entre ledit compartiment de charge utile et ledit dispositif d'engagement de surface pour faire varier la position verticale dudit compartiment de charge utile par rapport audit dispositif d'engagement de surface, ledit système de suspension comprenant en outre un sous-système de développement de trajectoire (25), couplé en communication audit élément d'application de force et audit dispositif de stockage de profils (22), permettant de développer un plan de trajectoire en réponse à un de ladite pluralité stockée de profils verticaux et d'émettre des ordres audit élément d'application de force, lesdits ordres correspondant audit plan de trajectoire.

8. Système de suspension active selon la revendication 7, dans lequel ledit dispositif de stockage de profils (22) est situé à distance dudit véhicule de surface.

9. Système de suspension active selon la revendication 7, dans lequel ledit sous-système de développement de trajectoire (25) est situé à distance dudit véhicule de surface.

10. Système de suspension active selon la revendication 1, comprenant en outre
un dispositif de stockage de trajectoires (25) permettant de stocker une base de données de trajectoires, lesdites trajectoires correspondant auxdits profils de route ;
un microprocesseur de trajectoire (20) couplé électroniquement audit dispositif de stockage et audit microprocesseur de profil de route (20) et en réponse audit microprocesseur de profil de route permettant de récupérer une desdites trajectoires et de communiquer des instructions, sur la base de ladite une trajectoire, à ladite suspension active.

11. Système de suspension active selon la revendication 10, dans lequel ledit dispositif de stockage de trajectoires (25) est situé à distance dudit véhicule de surface.

12. Système de suspension active selon la revendication 10, dans lequel ledit microprocesseur de trajectoire (20) est situé à distance dudit véhicule de surface.

13. Système de suspension active selon la revendication 1, comprenant en outre un microprocesseur de développement de trajectoire (20) couplé électroniquement à une suspension active permettant de développer une trajectoire verticale pour ledit profil détecté.

14. Système de suspension active selon la revendication 1, comprenant en outre :
un système localisateur (24) permettant de déterminer l'emplacement du véhicule de surface ;
un dispositif de stockage de trajectoires (25), permettant de stocker une base de données de trajectoires correspondant à des emplacements ; et
un microprocesseur de trajectoire (20) permettant de déterminer si ladite base de données contient une trajectoire correspondant audit emplacement déterminé, de récupérer ladite trajectoire correspondante, et de transmettre à ladite suspension active des instructions, sur la base de ladite trajectoire correspondante.

15. Système de suspension active selon la revendication 14, dans lequel ledit système localisateur (24) comprend un dispositif de système mondial de positionnement.

16. Procédé d'exploitation d'une suspension active de véhicule dans un véhicule de surface (10), le procédé comprenant :
la détection d'un profil vertical d'un chemin ;
l'enregistrement des données dudit profil vertical dans un dispositif de stockage de profils (22), où une pluralité de profils de chemin ont été stockés, lesdits profils incluant leurs données de déflexion verticale ; et
la comparaison dudit profil enregistré avec des profils stockés dans ledit dispositif de stockage de profils ;
la récupération à partir dudit dispositif de stockage de profils d'un profil stocké correspondant au chemin sur lequel ledit véhicule circule ; et
la commande de ladite suspension active de véhicule par des ordres émis par un processeur de commande (20), les ordres étant basés sur les données de déflexion verticale associées audit profil récupéré.

17. Procédé d'exploitation d'une suspension active de véhicule selon la revendication 16, comprenant en outre
la récupération, en réponse à une découverte que ledit profil détecté concorde avec un desdits profils stockés, d'un plan de trajectoire associé audit un profil stocké ; et
l'exécution dudit plan de trajectoire.

18. Procédé d'exploitation d'une suspension active de véhicule selon la revendication 16, comprenant en outre
l'enregistrement d'une entrée provenant de capteurs de performance ;
la modification, en réponse à ladite entrée de capteur de performance, dudit plan de trajectoire verticale.

19. Procédé d'exploitation d'une suspension active de véhicule selon la revendication 16, comprenant en outre
en réponse à une découverte que ledit profil détecté concorde avec un desdits profils stockés, le développement d'un plan de trajectoire pour ledit profil détecté ; et
l'exécution du plan de trajectoire.

20. Procédé d'exploitation d'une suspension active de véhicule selon la revendication 16, comprenant en outre
la détermination de l'emplacement dudit véhicule de surface (10) ;
la détermination pour savoir si un plan de trajectoire verticale correspondant audit emplacement est stocké dans ledit véhicule de surface ;
en réponse à une détermination que ledit plan de trajectoire verticale est stocké dans ledit système de suspension de véhicule, la récupération dudit plan ; et
l'exécution du plan de trajectoire.

21. Procédé d'exploitation d'une suspension active de véhicule selon la revendication 20, comprenant en outre
l'enregistrement d'une entrée provenant de capteurs de performance ;
la modification, en réponse à ladite entrée de capteur de performance, dudit plan de trajectoire verticale.

22. Procédé d'exploitation d'une suspension active de véhicule selon la revendication 20, dans lequel ladite étape de détermination inclut l'utilisation d'un satellite mondial de positionnement.

23. Procédé d'exploitation d'une suspension active de véhicule selon la revendication 16, comprenant en outre :
la détermination de l'emplacement dudit véhicule de surface (10) ;
la détermination qu'un profil correspondant audit emplacement est stocké dans ledit véhicule de surface ;
en réponse à une détermination que ledit profil est stocké dans ledit véhicule, la récupération dudit profil ;
le développement, en réponse audit profil récupéré, d'un plan de trajectoire ; et
l'exécution dudit plan de trajectoire.

24. Procédé d'exploitation d'une suspension active de véhicule selon la revendication 23, comprenant en outre les étapes de :
modification dudit profil ; et
stockage dudit profil modifié dans ledit dispositif de stockage.

25. Procédé selon la revendication 16, dans lequel lesdits profils de chemin sont associés à des emplacements et qui contiennent des données représentatives spécifiquement de déflexions verticales dudit chemin, mesurées à des incréments, ledit procédé comprenant en outre :
dans le cas où ledit profil enregistré concorde avec un desdits profils stockés, la détermination de l'emplacement dudit véhicule de surface (10) en identifiant l'emplacement associé à un profil concordant desdits profils stockés.
